# EUROPEAN PATENT APPLICATION

(11) **EP 2 873 481 A1**
(43) Date of publication of application: **20.05.2015**
(21) Application number: 13192684.2
(22) Date of filing: 13.11.2013
(51) Int. Cl.: B23K 9/013, B23K 26/073, B23K 26/36, B23K 26/40, C03B 33/02, C03B 33/09, C03B 33/10

(54) **A method and an apparatus for forming a groove in a substrate using laser or arc heating spot**

(71) Applicant: Asahi Glass Co., Ltd., Chiyoda-ku Tokyo 100-8405 (JP)
(72) Inventor: Stura, Enrico, 1010 Lausanne (CH); Linder, Michael, 1010 Lausanne (CH)
(74) Representative: Engelhard, Markus

(57) **Abstract**

A method and an apparatus for forming a groove in a substrate are described. The method comprises providing a substrate having a surface and providing a heating spot in a region of the surface. Heat is applied to the substrate through the heating spot. The heating spot has a first dimension in a first direction and a second dimension in a second direction perpendicular to the first direction. The first dimension is greater than the second dimension. The heating spot is moved on the surface relative to the substrate at least partially along the first direction, while applying heat to the substrate through the heating spot, such that material of the substrate previously subjected to the heating spot is lifted from the substrate.

## Description

The present invention relates to a method and an apparatus for forming a groove in a substrate, as well as a substrate having a groove formed by the method according to the present invention.

Many microtechnological application and devices require substrates which serve as a base for subsequent manipulation. In many cases, the substrate needs to have grooves. For example, grooves, which may also be referred to as trenches, may be used for biotechnological application, ink-jet technologies, cooling fluids or for accommodating microfluids.

Current techniques to form grooves in a substrate, such as mechanical grooving, often result in mechanical damages, such as cracks, being formed in the substrate. Moreover, with current techniques, there is also a risk that the groove may not be completely uniformalong its length, but show "ripples", i.e. inhomogeneities, in the sidewalls of the groove.

In addition, in EP 2 199 007 A1, a method of machining U-shaped grooves is disclosed, in which part of the substrate material from the surface of the substrate is peeled by rapidly heating the substrate with a laser. The laser may e.g. produce an elliptical beam.Moreover, an additional laser scribing process is described which is used to create a crack. In the laser scribing process, the shape of the laser beam spot is adjusted to an elliptical form or flat oval form along the line along which the substrate is to be divided.

It was an object of the present invention to allow the formation of grooves in a substrate reducing the problem of creation of cracks or ripples. It was also an object of the present invention to provide a flexible and efficient way of forming grooves of a desired shape.

All these objects are solved by the method according to claim 1, the apparatus according to claim 16 and the substrate according to claim 26. Preferred embodiments are addressed in the depending claims.

In a first aspect, a method for forming a groove in a substrate is provided. The method comprises:
(a) providing a substrate having a surface;
(b) providing a heating spot in a region of the surface and applying heat to the substrate through the heating spot, the heating spot having a first dimension in a first direction and a second dimension in a second direction perpendicular to the first direction; wherein the first dimension is greater than the second dimension; and
(c) moving the heating spot on the surface relative to the substrate at least partially along the first direction while applying heat to the substrate through the heating spot,
wherein step (c) is performed such that material of the substrate previously subjected to the heating spot is lifted from the substrate.

By providing a heating spot and applying heat to the substrate through the heating spot, thermal stress is induced in the substrate. Due to the thermal stress, material of the substrate affected by the heating spot separates from the rest of the substrate. Moreover, according to the above method, the heating spot is e.g. not in the form of a perfect circle, but has a shape, in which the heating spot is larger in a first direction than in a second direction. In the method of the invention, the heating spot is moved along the first direction. It was surprisingly found that the dissipation of heat induced through the heating spot can be tailored by the shape of the heating spot. By providing the heating spot of the described shape, the temperature gradient is larger in the second direction, such that fractures develop parallel to the first direction, in which the heating spot is moved. Hence, a groove may be formed without developing cracks or ripples. The groove may e.g. have a U-shaped or a V-shaped cross section.

In some embodiments, the first direction may be a direction, in which the heating spot has its largest dimension. In these embodiments, the first dimension is the largest diameter of the heating spot. Alternatively or additionally, the heating spot may have an axis of symmetry that is parallel to the first direction and wherein, preferably, the first dimension is measured along the axis of symmetry. This is preferred, as the fractures will develop equivalently on both sides of the heating spot, resulting in a more symmetric groove being formed. Additionally or alternatively, the heating spot may have a second axis of symmetry that is parallel to the second direction. In these embodiments, the amount of heat transferred laterally to the substrate is the same along the groove.

As step (c) is performed such that material of the substrate lifts from the substrate after being subjected to the heating spot, an easy visual detection is possible. Hence, it may easily be checked that the settings of the method, such as a heat flow applied through the heating spot and a velocity of moving the heating spot are within an acceptable range for the desired groove. To perform (c) such that material lifts from the substrate, parameters such as the size of the heating spot, the overall heat flow and the heat flow distribution in the heating spot, and/or the speed of relative movement between the heating spot and the substrate may be adjusted. Several examples of how to adjust such parameters will be given in the following description, using a variety of heat sources to provide the heating spot.

The heating spot may be provided with or without contacting the surface. For example, a heating plate may be brought into contact with the surface of the substrate to provide the heating spot on the substrate's surface. A portion of the heating plate contacting the surface may have the shape and size of the heating spot. For a flat surface of the substrate, the portion of the heating plate may e.g. also be flat.

However, it is preferred that the heating spot is provided in a contactless manner. Any process to apply heat locally to a substrate via a region of the substrate's surface without contacting the region may be used. In some embodiments, a high-intensity light beam may be used, as further described below. In these embodiments, the heating spot may correspond to the light spot produced by the light beam impinging on the surface of the substrate. The frequency of the light beam may e.g. be chosen based on the material of the substrate. In many embodiments, the light beam may be provided by a laser. Even a circular light beam may be used to generate a heating spot of the described shape by providing a tilt angle between the light beam and the surface, i.e. an angle of incidence that is less than 90°.

In some embodiments, an electric arc is used to apply heat to the substrate via the substrate's surface. The electric arc may be generated, e.g. between the tips of two electrodes spaced apart from each other and positioned at a distance above the surface. Parameters of forming the electric arc, such as the voltage amplitude, the voltage frequency, the electrode shape, the distance between the electrodes, the number of electrodes, etc. may be adjusted to provide a heating spot in a region of the substrate's surface having the desired shape.

In some embodiments, the heating spot is moved on the surface relative to the substrate at a constant speed. Alternatively or additionally, the heat flow applied to the substrate through the heating spot is constant for at least a period of the groove forming process. This improves uniformity of the groove formation. The heat flow generally refers to an amount of heat applied to the substrate per time interval, e.g. per second.

In some embodiments, the heating spot is moved on the surface relative to the substrate at an increasing speed and/or wherein the heat flow applied to the substrate through the heating spot is increased during the groove forming process. In particular, the speed and/or the heat flow applied to the substrate through the heating spot may be increased when detecting that material of the substrate previously subjected to the heating spot is lifted from the substrate.

In some embodiments, the heat is applied uniformly across the heating spot. For example, a light beam used to heat the substrate may have an intensity that is constant across the heating spot. However, in other embodiments, more heat may be applied though some areas of the heating spot than through others. In particular, in some embodiments, the heat flow may be larger in the center of the heating spot than near the boundaries of the heating spot.

In some embodiments, the heating spot may have a well-defined boundary, such as a boundary of a sharply defined laser beam. In other embodiments, the heating spot may have "blurred" boundaries. To define a dimension of the heating spot in this case, a contour line of the heating spot may be considered which represents a same amount of heat flow per area. For example, a contour line may be considered that corresponds to 50% of the maximum heat flow per unit area applied through the heating spot. To determine the dimensions of the heating spot, the contour line may then be evaluated.

According to some embodiments, the shape and size of the heating spot is not altered during step (c) of moving the heating spot along the first direction. However, e.g. for forming a curved trajectory of a groove or a segment of the trajectory, the direction of moving the heating spot on the surface may need to be rotated during the groove formation process. When rotating the direction of movement, additionally, the heating spot may be re-shaped or rotated, such that the direction of movement is still along a direction in which the heating spot has a comparably large dimension, such as e.g. its largest dimension or diameter.

Accordingly, in a preferred embodiment, in step (c), the heating spot and the substrate are rotated relative to each other along an axis perpendicular to the surface of the substrate while moving the heating spot relative to the substrate along a curved trajectory, such that the rotation of the heating spot corresponds to the curvature of the trajectory. In other words, during the groove formation process, the heating spot and the surface of the substrate remain aligned with each other, such that (1) the position of the heating spot on the surface follows the planned trajectory of the groove, and such that (2) a direction of the heating spot, along which the first dimension of the heating spot is measured, for example a longitudinal axis of the heating spot, remains parallel to the tangent of the planned trajectory of the groove. This also allows the formation of a groove that follows a curved trajectory.

The substrates in accordance with the present invention may have considerable extensions in lateral dimensions, whereas the thickness of the substrate may be comparatively small (in comparison to the lateral dimensions). Substrates in accordance with the present invention may be electrically insulating, such as glass or quartz, electrically semiconducting, such as elemental silicon, compound semiconductors, or they may be electrically conducting, such as metals.

The skilled person will understand that the step of moving the heating spot relative to the substrate may comprise that the heating spot is moved while the substrate remains fixed, that the heating spot remains fixed while the substrate is moved, or that both the heating spot and the substrate are moved.

In a preferred embodiment, the heating spot is moved parallel to the first direction. In other words, the direction of the relative movement between heating spot and substrate is parallel to the first direction. In some embodiments, the direction of the relative movement may be substantially parallel to the first direction, e.g. enclose an angle with the first direction that is less than 10 °, preferably less than 2°. The first direction may, e.g. be a longitudinal axis of the heating spot or a direction of largest dimension of the heating spot.

In a preferred embodiment, the heating spot is moved along a trajectory comprising multiple segments, wherein one or more segments follow straight lines and/or one or more segments follow curved lines. The segments following straight lines may be parallel to the first direction, such that the heating spot is moved parallel to the first direction, such as e.g. a longitudinal axis of the heating spot or a largest dimension of the heating spot. In this embodiment, several segments of the groove may be formed by performing the same process. In some embodiments, the segments may be interconnected with each other. Multiple segments may be formed without ceasing to provide the heating spot on the substrate's surface there between.

In some embodiments, the method further comprises the step of cooling the substrate, e.g. via a backside of the substrate opposite the surface with the heating spot provided thereon. For example, the substrate may be received in a receptacle having cooling means adapted to cool the substrate. Cooling the substrate while applying heat through the heating spot generally increases the thermal stress in the substrate, and may increase the efficiency of the groove formation process and reduce the processing time.

In some embodiments, the first dimension of the heating spot is between 1 mm and 10 mm, in particular between 2 mm and 8 mm and, preferably, between 4 mm and 5 mm. In a preferred embodiment, the second dimension of the heating spot is between 0.05 mm and 5 mm and, in particular between 0.1 mm and 2.5 mm and, preferably, between 0.2 mm and 0.7 mm, such as e.g. 0.5 mm. These dimensions are preferred, as they allow the formation of grooves with high uniformity.

According to a preferred embodiment, moving the heating spot relative to the substrate comprises moving the heating spot relative to the substrate at a speed of between 0.5mm/s and 15 mm/s, in particular, between 1 mm/s and 10 mm/s and, preferably, between 1 mm/s and 3 mm/s, such as e.g. 2 mm/s.

According to a preferred embodiment, the substrate is made of a material selected from electrically insulating material such as glass, in particular soda lime glass, quartz, diamond, alumina, sapphire, aluminium nitride, zirconia, and spinel, electrically semiconducting materials, such as silicon, including doped silicon and crystalline silicon, germanium, compound semiconductors such as gallium arsenide and indium phosphide, and electrically conducting materials, such as metals. It is generally preferred that the substrate has a high melting point, a high thermal expansion coefficient and a low thermal conductivity.

In a preferred embodiments, steps (b) and (c) are performed such that a groove having a depth of between 0.05 mm and 5 mm and, in particular, between 0.08 mm and 2.5 mm and, preferably, between 0.08 mm and 0.12 mm, such as e.g. 0.1 mm, is formed.

In a preferred embodiment, the heating spot has an oval shape. For example, the heating spot may have an elliptical shape. It is generally preferred that the heating spot does not have corners. Rather, the shape of the heating spot should in most embodiments be generally round, in order to avoid too large temperature gradients being formed in the substrate at undesired locations.

In some embodiments, the substrate has a thickness of between 0.5 mm and 20 mm, in particular between 2 mm and 15 mm and, preferably, between 2.5 mm and 5 mm, such as e.g. 3 mm.

According to a preferred embodiment, the providing the heating spot comprises: providing two electrodes spaced apart from each other and coupled to a voltage source; each of the two electrodes having a tip positioned above and spaced from the surface of the substrate; and applying a voltage between the electrodes to form an electric arc between the tips of the electrodes, thereby heating the substrate through the heating spot. In this embodiment, the heat is applied through formation of an electric arc. In some embodiments, the voltage and the electrode and tip shapes and positions are controlled such that the electric arc touches the surface of the substrate. In particular, the substrate may attract the electric arc formed between the tips. The substrate may additionally be grounded, coupled to a constant voltage source or coupled to a high-frequency voltage source. Moreover, in this embodiment, the first dimension equals or substantially equals a distance between the tips of the electrodes. The first direction thus corresponds to the direction of a projection of a straight line connecting the tips of the electrodes onto the surface of the substrate. Using an electric arc to provide the heating spot is preferred as the heating spot may easily be adjusted by adjusting e.g. the distance between the electrode tips, the distance between the tips and the surface, the voltage amplitude and/or the voltage frequency. Hence, almost any substrate may easily be processed by adjusting the heat source when switching to another substrate material. For example, the voltage amplitude and/or frequency may be controlled to prevent generation of ripples in the groove.

In particular, it is preferred that the voltage source is a Tesla transformer.

In a preferred embodiments, a distance between the tips of the electrodes and the surface is between 0.05 mm and 5 mm and, in particular, between 0.1 mm and 2.5 mm, and, preferably, between 0.2 mm and 0.7 mm. In some embodiments, the tips of the electrodes have a same distance to the surface of the substrate. The distance of the tips to the surface may be kept constant while applying heat to the substrate through the electric arc.

Additionally or alternatively, a distance between the tips of the electrodes is between 1 mm and 10 mm and, in particular, between 2 mm and 6 mm and, preferably, between 4 mm and 5 mm. In some embodiments, the distance between the tips is kept constant while applying heat to the substrate through the electric arc.

To move the heating spot relative to the substrate, the electrodes may be moved over the surface, e.g. at a constant speed and/or a speed of between of between 0.5 mm/s and 15 mm/s, in particular, between 1 mm/s and 10 mm/s and, preferably, between 1.5 mm/s and 3 mm/s. In some embodiments, the speed of the relative movement between the electrodes and the substrate and/or the heat flow applied through the heating spot is varied and is, in particular, increased during the groove formation processed, as described above.

It is also preferred that, alternatively or additionally, the distance between the tips of the electrodes and the surface is between 0.01 mm and 10 cm, such as e.g. 0.5 mm, and that the voltage has an amplitude of between 100 V and 10⁷ V and a frequency of between 10 kHz and 10 GHz. While specific settings for the distance and the voltage are given above, it should be understood by the skilled person that a suitable arc for heating the substrate may also be formed using other values for the distance and/or other voltage characteristics, depending on the substrate material, the ambient conditions during groove formation, etc.

In one embodiment, the electrodes are pointed electrodes having a longitudinal axis, which, during steps (b) and (c), e.g. may point towards the surface of the substrate. Electrodes with a relatively sharp tip also facilitate ignition of the electric arc as the electric field concentration around the tip promotes the ionization of the surrounding medium/atmosphere. The latter may be controlled in order to achieve optimal process conditions by e.g. selection of gas or liquid composition, pressure and temperature.

In some embodiments, the longitudinal axes of one or both electrode(s) may be tilted with respect to the surface. In other words, the longitudinal axis of the electrodes may enclose an angle with a surface normal of the substrate's surface of more than 0°, in particular more than 10° and, preferably, more than 20°.

Additionally or alternatively, the tips of the electrodes may be tilted towards each other. In this embodiment, the longitudinal axes of the electrodes may not be parallel, but enclose an angle which may, e.g. be between 5° and 90°, in particular, between 10° and 80°, preferably between 20° and 75°, and most preferably between 40° and 50°.

In one embodiment, the distance between the tips of the electrodes and the substrate's surface and/or the angle of the electrodes are maintained, even when the electrodes and the substrate are moved in relation to each other, thus moving one or both in relation to each other, but equidistantly from each other. For example, the electrodes may be moved along the surface of the substrate whilst maintaining a distance between the tips of one or both of the electrodes and the surface of between 0.01 mm and 10 cm.

According to a preferred embodiment, the providing the heating spot comprises providing a light beam, in particular, a laser light beam, projecting onto the surface to provide the heating spot. In some instances, the light beam may, in a cross-section perpendicular to the direction of the light beam, have an oval shape, such as an elliptical shape. In some embodiments, the light beam encloses an angle of incidence with the surface of the substrate of less than 90° and, in particular, less than 75°. This is, in particular, preferred in embodiments, in which a cross section of the light beam is circular. For example, the light beam may be tilted with respect to the surface of the substrate at an angle of between 10° and 80° in particular, between 20° and 70° and, preferably, between 50° and 70°. Hence, a heating spot of the described shape may be obtained by having a light beam with e.g. a circular cross section, as seen along a plane perpendicular to the direction of the light beam, impinging on the surface of the substrate at an angle of less than 90°.

The light beam may comprise infrared light. Generally, the wavelength or wavelength spectrum of the light beam may be chosen based on the material of the substrate.

In a further aspect, an apparatus is provided, which comprises a receptacle adapted to receive a substrate having a surface, and a heat source adapted to provide a heating spot in a region of the surface to apply heat to the substrate through the heating spot. The heating spot has a first dimension in a first direction and a second dimension in a second dimension perpendicular to the first direction. The first dimension is greater than the second dimension. The apparatus further comprises a drive mechanism adapted to move the heating spot or the receptacle to cause relative movement between the heating spot and the substrate. The apparatus further comprises control circuitry coupled to the drive mechanism to control the drive mechanism to cause relative movement of the heating spot on the surface at least partially along the first direction, wherein the heat source is adapted to apply heat to the substrate through the heating spot during the relative movement of the heating spot such that material of the substrate previously subjected to the heating spot is lifted from the substrate.

The drive mechanism may be adapted to move the heating spot or the substrate. To move the heating spot, the drive mechanism may be coupled to the heat source. For example, the drive mechanism may be adapted to move the heat source or a part thereof, or e.g. to deflect a light beam generated by a light source of the heat source.

The receptacle may be a device or portion thereof that is adapted to support the substrate. To this effect, the receptacle may comprise a surface area, on which a backside of the substrate may be placed. The backside of the substrate may refer to a side of the substrate that is opposite the surface, in which the groove is to be formed and which is subjected to the heating spot. In some embodiments, the receptacle comprises means for fixating the substrate, such as one or more clamps or suction means. Alternatively or additionally, the receptacle may comprise means adapted for cooling the substrate, such as conduits for circulating a cooling fluid, a Peltier element, etc.

In a preferred embodiment, the receptacle is mounted on a carriage coupled to the drive mechanism, wherein the drive mechanism is adapted to move the substrate by moving the carriage relative to the heat source.

In a preferred embodiment, the heat source comprises a voltage source and two electrodes spaced apart from each other and coupled to the voltage source. Each of the two electrodes has a tip adapted to be positioned above and spaced from the region of the surface. The voltage source applies a voltage between the electrodes to form an electric arc between the electrodes, thereby heating the substrate through the heating spot. In particular, the voltage source may comprise a Tesla transformer. The distance and the voltage may e.g. be chosen as described above. The voltage source may be further electrically coupled to the receptacle and/or the substrate.

In a preferred embodiment, the electrodes are adapted to be positioned with the tips between 0.05 mm and 5 mm and, in particular, between 0.1 mm and 2.5 mm, and, preferably, between 0.2 mm and 0.7 mm above the surface. Alternatively or additionally, a distance between the tips of the two electrodes is between 1 mm and 10 mm and, in particular, between 2 mm and 6 mm and, preferably, between 4 mm and 5 mm.

The electrodes may be adapted to be positioned with the tips between 0.01 mm and 10 cm above the surface, and the voltage has an amplitude of between 100 V and 10⁷ V and a frequency of between 10 kHz and 10 GHz.

In some embodiments, the heat source may have one or more additional electrodes, each additional electrode having a tip. The tips of the two electrodes and the tips of each of the additional electrodes may be positioned along a straight line, or at least a perpendicular projection of the tips onto the surface of the substrate may be a straight line.

According to a preferred embodiment, the heat source comprises a light source, such as a laser. In particular, the light source may be adapted to provide a light beam projected onto the region of the substrate's surface to provide the heating spot. In some embodiments, the light beam may be tilted with respect to the surface of the substrate and/or a support surface area of the receptacle. For example, the light source may be adapted to provide the light beam, such that an angle of incidence between the light beam and the surface is less than 90° and, in particular, less than 75°.

In a preferred embodiment, the drive mechanism is adapted to move the heating spot relative to the substrate along a curved trajectory, and the heat source or the drive mechanism is adapted to rotate the heating spot and the substrate relative to each other along an axis perpendicular to the surface while the drive mechanism causes the relative movement, such that the rotation of the heating spot corresponds to the curvature of the trajectory. This allows the formation of a groove that at least partially follows a curved trajectory.

In embodiments, in which the heat source comprises electrodes, the electrodes may be rotated along an axis perpendicular to the surface, such that, during the relative movement, a projection of a straight line connecting the tips of the electrodes onto the surface of the substrate corresponds to the tangent of the curved trajectory along which the groove is planned to extend.

In a further aspect, a substrate is provided, having a groove formed by the above-mentioned method.

Additional features of the present invention and advantages thereof will become evident when reading the following description in conjunction with the accompanying figures, in which
- Fig. 1: shows a schematic top view of a substrate with a heating spot provided thereon;
- Fig. 2a: shows a schematic cross section through a portion of an apparatus according to an embodiment;
- Fig. 2b: is a detail view of the portion of Fig. 2a;
- Fig. 3: shows a schematic cross section through a portion of an apparatus according to another embodiment;
- Fig. 4: shows a schematic perspective view of a groove being formed in a substrate;
- Fig. 5: shows an image of a substrate having a groove formed therein with material lifted off from the substrate;
- Fig. 6: shows another photograph similar to Fig. 5 from another perspective;
- Fig. 7: shows an image of a substrate having a groove with curved segments formed therein;
- Fig. 8: shows a detailed view of a substrate having a groove with ripples;
- Fig. 9: shows an electron-microscope image of a substrate having a groove formed using a method according to an embodiment; and
- Fig. 10: shows a schematic view illustrating the formation of a curved groove section.

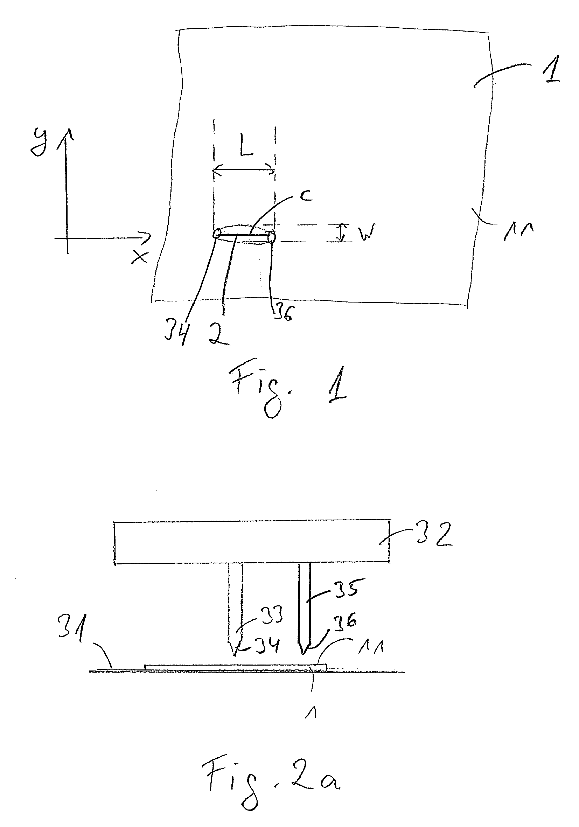

Fig. 1 is a top view of a substrate 1 that may be used in some embodiments of the present invention. In particular, a surface 11 of the substrate 1 is shown, which extends along the x- and y-directions, while the thickness of the substrate 1 may be measured in z-direction (not shown). A heating spot 2 is provided on the surface 11 of the substrate 1. The heating spot 2 has an oval shape with a length L and a width W. According to the embodiment illustrated in Fig. 1, the length L of the heating spot 2 is greater than the width W of the heating spot 2 (L>W). The length L may be considered as a first dimension of the heating spot 2 along the x-direction, while the width W of the heating spot 2 may be considered as a second dimension of the heating spot 2 along the y-direction. Employing the method of the invention, the heating spot 2 is used to apply heat to the substrate 1 through the heating spot 2. While performing the method of the invention, the heating spot 2 may be moved on the surface 11 along the x-direction to provide a groove following a straight base line. Still, as will be described in more detail below, the method of the invention may also be used to form a groove that follows a trajectory with curved segments.

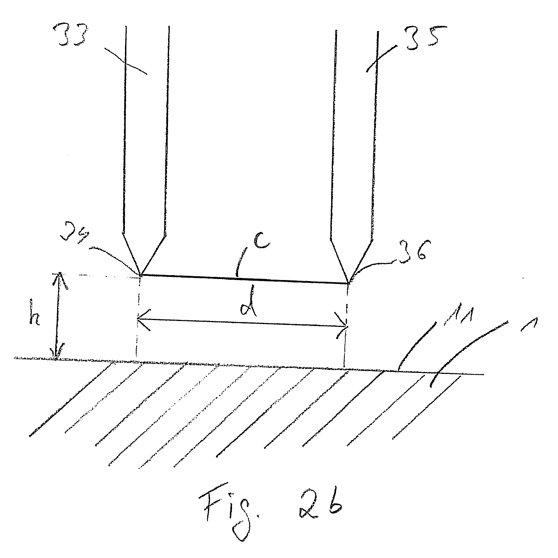

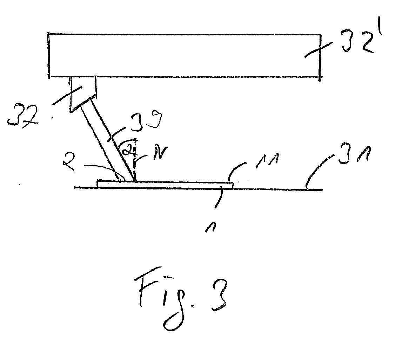

In different embodiments of the invention, different ways to provide the heating spot 2 may be used. For example, in some embodiments, a light beam, such as a laser light beam may be used, as will be described below e.g. with reference to Fig. 3. As a further option, two or more electrodes may be used, each electrode having a tip, as will be described below with reference to Fig. 2a and 2b.

Fig. 1 shows schematically the position of two tips 34, 36 of electrodes, with a (virtual) straight line c connecting the tips 34, 36. The connecting line c is aligned with the x-direction in Fig. 1, and the electrodes are moved in the direction of the straight connecting line c, i.e. in x-direction. Furthermore, the distance between the tips 34, 36 define the length L of the heating spot 2.While the tips 34, 36 and the line 2 are shown in Fig. 1, the skilled person will readily understand that other ways to provide the heating spot 2 with length L and width W may be used.

Fig. 2a shows a schematic cross section through a portion of an apparatus according to an embodiment of the invention. The apparatus comprises a receptacle 31 that is adapted to receive a substrate 1 having a surface 11. In the illustrated embodiment, the receptacle 31 takes the form of a horizontal surface. In Fig. 2a, the substrate 1 is placed on the receptacle 31, such that the surface 11 faces away from the receptacle 31. Moreover, the apparatus comprises a heat source 32 that comprises two electrodes 33 and 35 having tips 34 and 36, respectively. The electrodes 33, 35are positioned over the surface 11 of the substrate 1, such that the tips 34, 36 of the electrodes 33, 35 are positioned a distance away from the surface 11. The heat source 32 further comprises a voltage source (not shown) that is electrically coupled between the electrodes 33, 35 to apply a voltage between the tips 34, 36 of the electrodes 33, 35. The receptacle 31 may additionally be coupled e.g. to ground, to a constant voltage source or to a high-frequency voltage source. By applying the voltage between the electrodes 33, 35, an electric arc is formed between the tips 34, 36 of the electrodes 33, 35. In the electric arc, the electric current flowing between the tips 34, 36 produces heat, such that the substrate 1 is heated locally through a region of the surface 11.

Fig. 2b shows a detailed view of Fig. 2a. In Fig. 2a,b, the electrodes 33, 35 are parallel to each other. However, in alternative embodiments, the electrodes 33, 35 may be tilted towards each other, such that the tips 34, 36 of the electrodes 33, 35 point to each other. The connecting line c between the tips 34, 36 defines a direction, in which the heating spot provided by the electric arc between the tips 34, 36 has its largest dimension. Hence, in this embodiment, the length L of the heating spot is defined by the distance d between the tips 34, 36.

Moreover, in the embodiment of Fig. 2a, b, the tips 34, 36 have a same distance h from the surface 11 of the substrate 1. Yet, in alternative embodiments, the tips 34, 35 may have different distances to the surface 11. Moreover, while the electrodes 33, 35 are drawn with pointed tips 34, 36 in Fig. 2a, b, the skilled person will understand that the tips 34, 36 of the electrodes may, in alternative embodiments, define a tip area, such as e.g. a flat tip area.

For forming a groove in the substrate 1, a relative movement between the tips 34, 36 of the electrodes 33, 35 and the substrate 1 is caused. To this effect, the electrodes 33, 35 may be moved relative to the receptacle 31, or, alternatively, the receptacle 31, or a part thereof that receives the substrate 1, may be moved relative to the electrodes 33, 35, or, as a further alternative, both the electrodes 33, 35 and the receptacle 31 may be moved. In some embodiments, the receptacle 31 may comprise displacement means (not shown) to displace the substrate 1 received in the receptacle 31 to cause the relative movement between the heating spot and the substrate 1. The displacement means may, e.g. comprise one or more pistons, etc.

During the relative movement between the receptacle 31 and the electrodes 33, 35, the distance d between the tips 34, 36 of the electrodes 33, 35 and/or the distance between the tips 34, 36 and the surface 11 of the substrate 1 may be maintained, i.e. kept constant. Additionally or alternatively, the voltage applied between the electrodes 33, 35 may be kept constant during the relative movement.

Fig. 3 shows a schematic cross section through another embodiment of an apparatus according to the invention. The apparatus illustrated in Fig. 3 comprises a heat source 32' having a light source 37, such as a laser. The light source 37 is adapted to generate a light beam 39 projecting onto the surface 11 of the substrate 1. Through the spot 2, which results from the light beam 39 impinging on the surface 11, heat is applied to the substrate 1. The light spot formed by the light beam 39 on the surface 11 may therefore be considered as a heating spot.

In more detail, the light beam 39encloses an angle with the surface 11, as shown by the angle α between the light beam 39 and the surface normal N of the surface 11. By adjusting the angle α, the shape of the spot 2 on the surface 11 may be adjusted. For example, when, in a cross section perpendicular to the direction of the light beam 39, the light beam 39 has a perfectly circular cross section, the spot produced by the light beam 39 projecting on the surface 11 may have an elliptical shape when the angle α is less than 90°.

As has already been described above with respect to Fig. 2a, b, a groove may be formed in the substrate 1 by moving the substrate 1 relative to the heat source. In particular, a groove may be formed by moving one of the following: the receptacle 31 or a part thereof, the substrate 1 on the receptacle 31, the heat source 32' including the light source 37, the light source 37, or the light beam 39. While it is, in principle, possible to form a groove by only moving the light beam 39 over the surface 11 of the substrate 1, for example by using one or more mirrors deflecting the light beam and having their orientations varied during the groove forming process, it is preferred that the angle α is kept constant for at least a portion of the groove forming process. Thus, a groove of more uniform shape may be formed.

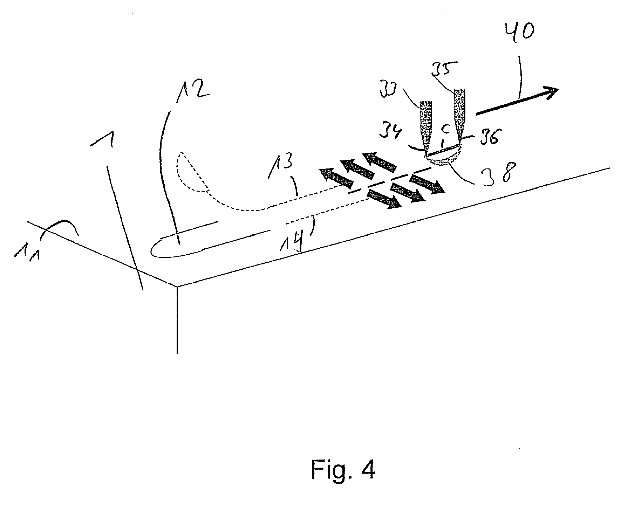

Fig. 4 shows a schematic perspective view of a substrate 1 having a groove 12 formed therein. In more detail, a set of two electrodes 33, 35 is provided, which are coupled to a voltage source (not shown). Between the tips 34, 36 of the electrodes 33, 35, an electric arc 38 is formed. The electric arc 38 is drawn to the surface 11 of the substrate 1, thus providing a heating spot in a region of the surface 11. As the heating spot is produced between the tips 34, 36 of the two electrodes 33, 35, it has an elongate shape, extending along a longitudinal axis that is parallel to the line c connecting the tips 34, 36 of the electrodes 33, 35. By moving the electrodes 33, 35 relative to the substrate 1 along a direction generally indicated by the reference numeral 40 in Fig. 4, parallel to the connecting line c of the tips 34, 36, a groove 12 is formed. The direction indicated by the reference numeral 40 is thus parallel to the longitudinal axis of the heating spot 2.

When the heating spot is provided on the surface 11, and heat is transferred to the substrate 1 through the heating spot, thermal stress will develop within the substrate 1 between an area within the heating spot and areas outside thereof. The thermal stress will lead to fractures, resulting in material under the heating spot separating from the remainder of the substrate 1. The separation between the material and the substrate 1 will take place along lines generally indicated by reference numerals 13 and 14 in Fig. 4. In particular, fractures will develop when the thermal gradient is sufficiently large. Generally, the threshold of the thermal gradient for developing fractures will depend on the material of the substrate, its thickness, the temperature of the substrate (away from the heating spot), the cooling of the substrate, e.g. via the receptacle, presence of an ambient gas, etc. The parameters of the method are controlled such that material subjected to the heating spot lifts from the substrate.

The thermal gradient may be adjusted in the groove formation process by adjusting the heat flow, e.g. the heat introduced per second, and the speed of the heating spot moving over the surface 11. With reference to the apparatus illustrated in Fig. 2a, b, the heat flow introduced into the substrate 1 may be adjusted, e.g. by adjusting the distance d between the tips 34, 36 of the electrodes 33, 35, the distance h between the tips 34, 36 and the surface 11, the number of electrodes used, the area and shape of the tips 34, 36 of the electrodes 33, 35, the frequency of the voltage and/or the voltage amplitude.

With reference to the apparatus shown in Fig. 3, the heat flow introduced into the substrate 1 may be adjusted e.g. by adjusting the light beam intensity, the light beam frequency or spectrum, and the shape and size of the spot 2. The shape and size of the spot 2 may, e.g. be adjusted by adjusting the cross sectional area of the light beam 39or the angle α between the light beam 39 and the surface normal N.

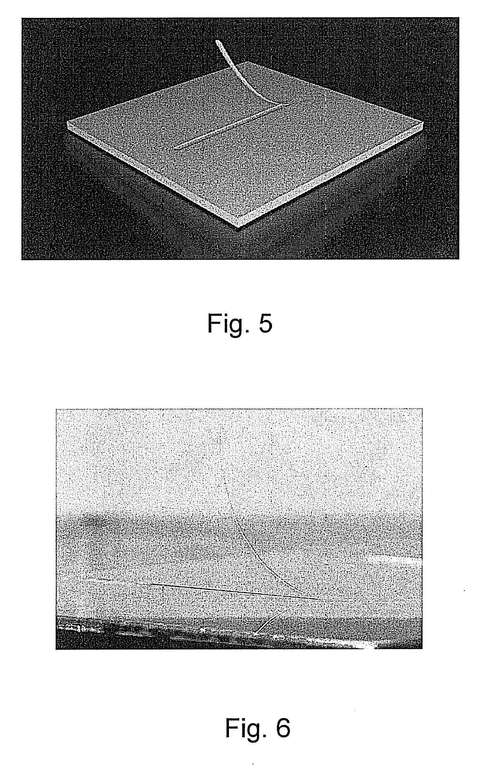

Fig. 5 shows a computer-generated image illustrating a substrate having a groove formed therein. Moreover, Fig. 5 also shows the material lifted off from the substrate. The material lifted off from the substrate previously filled the groove. As the material that is lifted off can clearly be seen, it can be used for visual inspection during the groove formation process to evaluate the quality of the formation process and/or for adjusting parameters thereof, such as e.g. the speed of the relative movement between the substrate and the heating spot and/or the heat flow introduced into the substrate through the heating spot as described above. Fig. 6 shows a photograph similar to the image of Fig. 5 from another perspective.

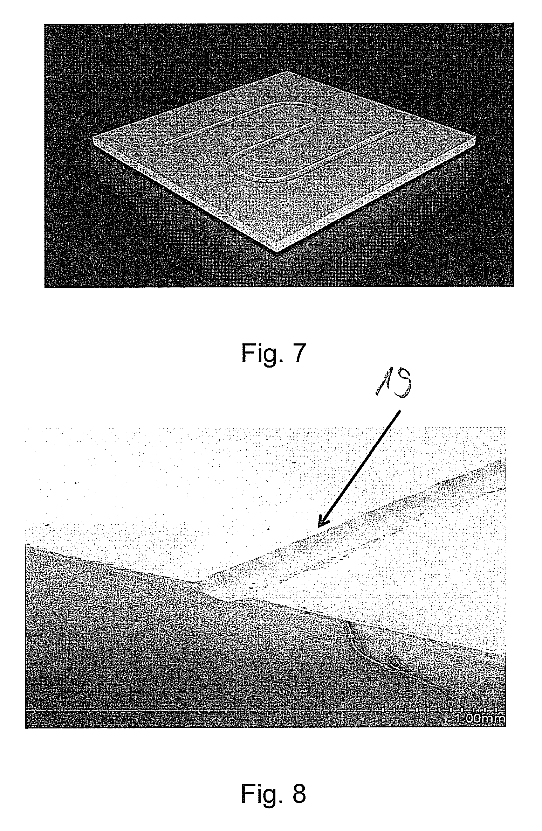

Fig. 7 shows another computer-generated image, similar to the one shown in Fig. 5. In particular, Fig. 7 shows a substrate with a groove following a serpentine trajectory. In more detail, the groove illustrated in Fig. 7 has three straight segments connected by two curved segments. According to the method of the invention, the groove may be formed by moving the heating spot at least partially along the first direction, in which the heating spot has a larger or even a largest dimension. In order to form a curved segment of the groove, the heating spot may e.g. be rotated, such that the rotation of the heating spot follows the trajectory of the desired groove.

Fig. 8 shows a detailed view of a substrate having a groove formed therein. As indicated by reference numeral 19 in Fig. 8, the groove, however, has ripples, i.e. inhomogeneities in the side walls of the groove. Such ripples may be formed when heat is applied unevenly during the groove formation process and are generally undesired. Using the method of the invention, the occurrence of such ripples may be reduced or even eliminated.

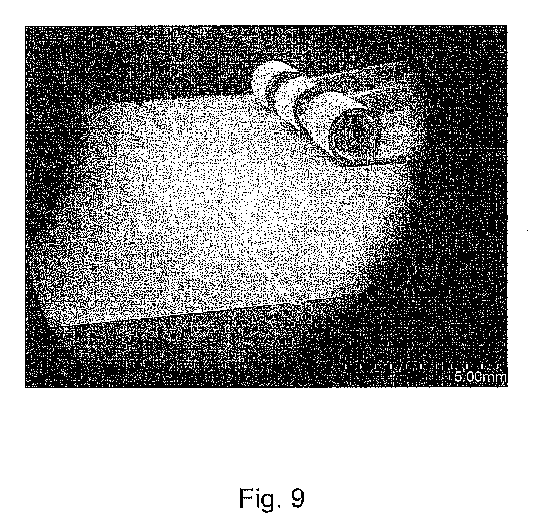

Fig. 9 shows an electron-microscope image of another substrate having a groove formed therein, using the method of the invention. In Fig. 9, portions of the substrate have been cut away to more clearly show the cross section of the groove.

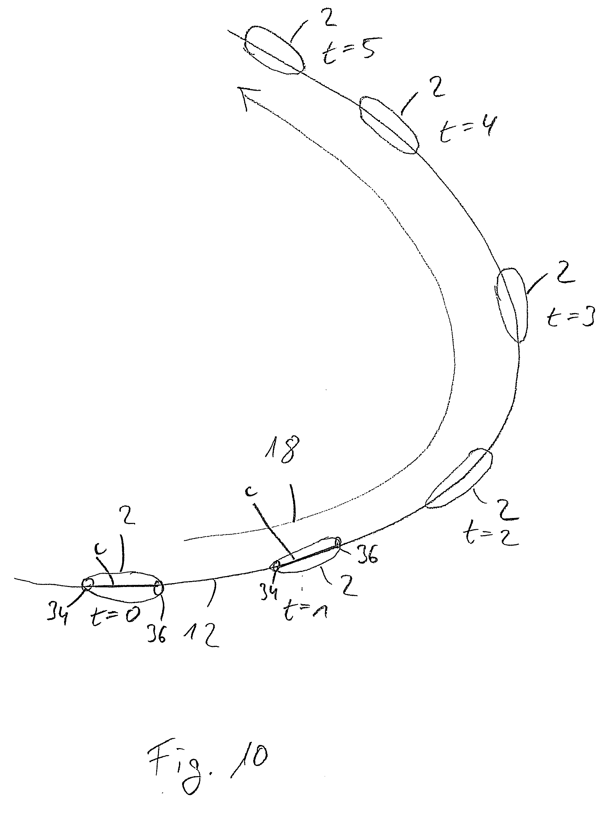

Fig. 10 shows a schematic view illustrating the formation of a curved groove segment. In more detail, Fig. 10 shows a top view of a substrate. The groove 12 is formed by moving a heating spot 2 on the surface of the substrate along a curved trajectory generally indicated by the arrow 18. In Fig. 10, the position and rotation of the heating spot 2 at six different times (t=0, ..., 5) is shown. As can be seen from Fig. 10, the rotation angle of the heating spot 2 follows the rotation of the direction in which the heating spot 2 is moved on the surface, i.e. the curvature of the trajectory. In other words, while moving the heating spot 2 relative to the substrate along the trajectory, the heating spot 2 is rotated, such that its longitudinal axis remains parallel to the direction of the movement, i.e. the tangent of the trajectory.

For illustrative purposes only, the positions of the tips 34, 36 of electrodes are shown in Fig. 10 to illustrate the rotation of the electrodes along a rotation axis that is perpendicular to the surface of the substrate, according to some embodiments. As can be seen from Fig. 10, the electrodes are rotated such that the line c connecting the tips 34, 36 of the electrodes remains aligned with the tangent of the trajectory at each position of the heating spot along the trajectory. While the tips 34, 36 and the line c are shown in Fig. 10, the skilled person will, however, readily understand that the heating spot 2 may be provided using alternative means, such as a laser beam, etc. In some embodiments, the speed of the relative movement between the heating spot and the substrate may be constant and/or the heat flow applied through the heating spot maybe constant. In some embodiments, the speed and/or the heat flow may be increased during the groove forming process, e.g. upon detection that material previously subjected to the heating spot lifts off from the substrate.

The features of the present invention disclosed in the specification, the claims and/or in the accompanying drawings may, separately or in combination, be material for realizing the invention in various forms.

## Claims

1. A method for forming a groove in a substrate (1), the method comprising:
(a) providing a substrate (1) having a surface (11);
(b) providing a heating spot (2) in a region of the surface (11) and applying heat to the substrate (1) through the heating spot (2), the heating spot (2) having a first dimension (L) in a first direction (x) and a second dimension (W) in a second direction (y) perpendicular to the first direction (x); wherein the first dimension (L) is greater than the second dimension (W); and
(c) moving the heating spot (2) on the surface (11) relative to the substrate (1) at least partially along the first direction (x) while applying heat to the substrate (1) through the heating spot (2),
wherein step (c) is performed such that material of the substrate (1) previously subjected to the heating spot (2) is lifted from the substrate (1).

2. The method of claim 1, wherein the heating spot (2) is moved on the surface (11) relative to the substrate (1) at a constant speed and/or wherein the heat flow applied to the substrate (1) through the heating spot (2) is constant for at least a period of the groove forming process.

3. The method of claim 1, wherein the heating spot (2) is moved on the surface (11) relative to the substrate (1) at an increasing speed and/or wherein the heat flow applied to the substrate (1) through the heating spot (2) is increased during the groove forming process.

4. The method of claim 1, 2 or 3, wherein in step (c) the heating spot (2) and the substrate (1) are rotated relative to each other along an axis perpendicular to the surface (11) of the substrate (1) while moving the heating spot (2) relative to the substrate (1) along a curved trajectory, such that the rotation of the heating spot (2) corresponds to the curvature of the trajectory.

5. The method of any of the preceding claims, wherein the second dimension (W) is between 0.05 mm and 5 mm and, in particular, between 0.1 mm and 2.5 mm, and, preferably, between 0.2 mm and 0.7 mm.

6. The method of any of the preceding claims, wherein the moving the heating spot (2) relative to the substrate (1) comprises moving the heating spot (2) relative to the substrate (1) at a speed of between 0.5 mm/s and 15 mm/s, in particular, between 1 mm/s and 10 mm/s and, preferably, between 1.5 mm/s and 3 mm/s.

7. The method of any of the preceding claims, wherein the substrate (1) is made of a material selected from electrically insulating material such as glass, in particular soda lime glass, quartz, diamond, alumina, sapphire, aluminium nitride, zirconia, and spinel, electrically semiconducting materials, such as silicon, including doped silicon and crystalline silicon, germanium, compound semiconductors such as gallium arsenide and indium phosphide, and electrically conducting materials, such as metals.

8. The method of any of the preceding claims, wherein the heating spot (2) has an oval shape.

9. The method of any of the preceding claims, wherein the providing the heating spot (2) comprises:
providing two electrodes (33, 35) spaced apart from each other and coupled to a voltage source; each of the two electrodes (33, 35) having a tip (34, 36) positioned above and spaced from the surface (11) of the substrate (1); and
applying a voltage between the electrodes (33, 35) to form an electric arc between the tips (34, 36) of the electrodes (33, 35), thereby heating the substrate (1) through the heating spot (2).

10. The method of claim 9, wherein the voltage source is a Tesla transformer.

11. The method of claim 9 or 10, wherein a distance (h) between the tips (34, 36) of the electrodes (33, 35) and the surface (11) is between 0.05 mm and 5 mm and, in particular, between 0.1 mm and 2.5 mm, and, preferably, between 0.2 mm and 0.7 mm.

12. The method of any of claims 9 to 11, wherein a distance (d) between the tips (34, 36) of the electrodes (33, 35) is between 1 mm and 10 mm and, in particular, between 2 mm and 6 mm and, preferably, between 4 mm and 5 mm.

13. The method of any of claims 9 to 12, wherein a distance (h) between the tips (34, 36) of the electrodes (33, 35) is between 0.01 mm and 10 cm, and wherein the voltage has an amplitude of between 100 V and 10⁷ V and a frequency of between 10 kHz and 10 GHz.

14. The method of any of claims 1 to 8, wherein the providing the heating spot (2) comprises providing a light beam (39), in particular a laser light beam, projecting onto the surface (11) to provide the heating spot (2).

15. The method of claim 14, wherein the light beam (39) encloses an angle of incidence with the surface (11) of the substrate (1) of less than 90°, in particular, less than 75°.

16. An apparatus comprising:
a receptacle (31) adapted to receive a substrate (1) having a surface (11);
a heat source (32; 32') adapted to provide a heating spot (2) in a region of the surface (11) to apply heat to the substrate (1) through the heating spot (2), the heating spot (2) having a first dimension (L) in a first direction (x) and a second dimension (W) in a second direction (y) perpendicular to the first direction (x); wherein the first dimension (L) is greater than the second dimension (W); and
a drive mechanism adapted to move the heating spot (2) or the substrate (1) to cause relative movement between the heating spot (2) and the substrate (1),
control circuitry coupled to the drive mechanism to control the drive mechanism to cause relative movement between the heating spot (2) and the substrate (1) least partially along the first direction (x), wherein the heat source (32; 32') is adapted to apply heat to the substrate (1) through the heating spot (2) during the relative movement of the heating spot (2), such that material of the substrate (1) previously subjected to the heating spot (2) is lifted from the substrate (1).

17. The apparatus of claim 16, wherein the receptacle (31) is mounted on a carriage coupled to the drive mechanism, wherein the drive mechanism is adapted to move the substrate (2) by moving the carriage relative to the heat source (32).

18. The apparatus of claim 16 or 17, wherein the heat source (32; 32') comprises a voltage source and two electrodes (33, 35) spaced apart from each other and coupled to the voltage source, each of the two electrodes (33, 35) having a tip (34, 36) adapted to be positioned above and spaced from the region of the surface (11), wherein the voltage source applies a voltage between the electrodes (33, 35) to form an electric arc between the tips (34, 36) of the electrodes (33, 35), thereby heating the substrate (1) through the heating spot.

19. The apparatus of claim 18, wherein the voltage source is a Tesla transformer.

20. The apparatus of claim 18 or 19, wherein the electrodes (33, 35) are adapted to be positioned with the tips (34, 36) between 0.05 mm and 5 mm and, in particular, between 0.1 mm and 2.5 mm, and, preferably, between 0.2 mm and 0.7 mm above the surface (11).

21. The apparatus of any of claims 18 to 20, wherein a distance (d) between the tips (34, 36) of the two electrodes (33, 35) is between 1 mm and 10 mm and, in particular, between 2 mm and 6 mm and, preferably, between 4 mm and 5 mm.

22. The apparatus of any of claims 18 to 21, wherein the electrodes (33, 35) are adapted to be positioned with the tips (34, 36) between 0.01 mm and 10 cm above the surface (11), and wherein the voltage has an amplitude of between 100 V and 10⁷ V and a frequency of between 10 kHz and 10 GHz.

23. The apparatus of claim 16 or 17, wherein the heat source comprises a light source (37), in particular a laser light source, that is adapted to provide a light beam (39) projected onto the region of the surface (11) to provide the heating spot (2).

24. The apparatus of claim 23, wherein the light source (37) is adapted to provide the light beam (39), such that an angle of incidence between the light beam and the surface (11) is less than 90° and, in particular, less than 75°.

25. The apparatus of any one of claims 16 to 24, wherein the drive mechanism is adapted to move the heating spot (2) relative to the substrate (11) along a curved trajectory, and wherein the heat source or the drive mechanism is adapted to rotate the heating spot (2) and the substrate (1) relative to each other along an axis perpendicular to the surface (11) while the drive mechanism causes the relative movement, such that the rotation of the heating spot (2) corresponds to the curvature of the trajectory.

26. A substrate (1) having a groove formed by the method according to any of claims 1 to 15.
